# EUROPEAN PATENT APPLICATION

(11) **EP 1 259 050 A1**
(43) Date of publication of application: **20.11.2002**
(21) Application number: 01201890.9
(22) Date of filing: 18.05.2001
(51) Int. Cl.: H04M 1/2745, H04M 1/247, H04M 1/725

(54) **Multitasking user interface**

(71) Applicant: Telital R & D Denmark A/S, 9530 Stoevring (DK)
(72) Inventor: Oesterballe, Lars, 8800 Viborg (DK)
(74) Representative: Elmeros, Claus

(57) **Abstract**

The invention relates to the user interface of a mobile communication system (MCD) according to claim 1, said user interface comprising
input means (IM)
input processing means (IPM)
display means (DM)
at least one system database/indexed data table (IDT),
said input processing means (IPM) being adapted to processing input signals (IS) obtained by means of said input means (IS) and to simultaneously displaying at least two separate processes controlled by said input signals (IS) at said display means (DM).

Activation may e.g. result in a call being initiated on the basis of the input characters, e.g. a telephone number.

According to the invention, the user may input characters addressing several functions / indices and the different results may be displayed simultaneously. Hence, the user may in fact establish different requests or functions before he chooses the manner in which he actually intends to proceed.

## Description

The present invention relates to a user interface according to claim 1.

### Summary of the invention

The invention relates to the user interface of a mobile communication system (MCD) according to claim 1, said user interface comprising
input means (IM)
input processing means (IPM)
display means (DM)
at least one system database/indexed data table (IDT),
said input processing means (IPM) being adapted to processing input signals (IS) obtained by means of said input means (IS) and to simultaneously displaying at least two separate processes controlled by said input signals (IS) on said display means (DM).

According to the invention, several components may in fact be arranged as an integrated system, e.g. as a mobile telecommunication device, or an external or partly external system to main elements of the mobile communication system, e.g. a mobile telecommunication device. An example of such an external component may e.g. be a contact database externally connected to a mobile telephone.

Moreover, hardware components of the system may be arranged externally (or: separately) from the rest of the system. Such components may e.g. be an input device communicating cordlessly with a system which is mainly comprised in a mobile telephone or a mobile telecommunication device.

The simultaneously displayed processes may e.g. simply be input(s) displayed in separate areas of the display and according to the syntax associated with the individual processes, meaning that the activation of a standard 2-key is displayed as a number in one sub-area of the display and as character in another sub-area of the display adapted to displaying a process implying the input of a character.

According to the invention, the system database/indexed data table may e.g. be a customized database containing personal information defined wholly or partly by the user and which he finds relevant. Such a database may e.g. comprise a contact database.

According to the invention, the user may input characters addressing several functions / indices and the different results may be displayed simultaneously. Hence, the user may in fact establish different requests or functions before he actually chooses the manner in which he actually intends to proceed.

By operating especially a cellular phone in this manner, the freedom of the user may be increased significantly in the sense that he may avoid the typical menu-oriented way of guiding him deep into a certain pre-selected mode in order to perform a certain desired action, such as a request for a selection, etc.

According to the invention, several different modes may be operated simultaneously without requiring the user to deselect other modes or functions at an early stage of the operation.

According to the terms of the invention, input means may e.g. comprise voice activation, keyboard, touch screen, a mouse, etc.

It should be noted that according to the invention, a look-up data table may comprise several different types of data elements, e.g. a look-up table comprising telephone numbers which may be addressed via user-defined characters, words or numbers. Such a data element may also be an executable code, i.e. a code which may be activated when selected by the user. Such an executable code may e.g. traditionally be a name entered in a customized telephone book incorporated in a mobile communication device which results in a call being initiated to a telephone number associated with the selected name when activated.

Another possible table may e.g. be look-up table comprising information held in e.g. the internal memory of the communication device, or the information may e.g. be accessed in an external database e.g. via WAP, http or other applicable protocols and systems.

As stated above, the data elements may evidently comprise information only and/or executable commands.

It should be noted that the index data table may be internal or external.

Moreover, it should be noted that the mobile communication device may comprise means for establishing the desired combinations of parallel processes.

According to the invention, parallel processing performed by said input processing means (IPM) adapted to processing input signals (IS) may preferably mean that at least one of the parallel processes performed by the input processing means is handled by an interactive interface so that input signals dynamically invoke an update of the available choices. In this sense, a choice may be a comparison of the input signals to the keys addressing a relevant database on a run-time basis and matching the available database keys to the already established input signals presented to the user. In other words, the user may be presented to a look-up table.

Evidently, other variants of a process which may be performed simultaneously with other processes may result in much simpler interface semantics, e.g. a simple one-to-one display of an input signal as a number on a dedicated sub-area of the display means.

When, as stated in claim 2, said system comprises means for selecting and activating (AM) at least one of said two separate processes, a further advantageous embodiment of the invention has been obtained.

According to an embodiment of the invention, the means for selection and activation may typically be used to perform a subsequent determination of a desired function, e.g. whether the input sequence is actually intended to be a telephone number and whether a call should be established on the basis of the number.

Other possible subsequent determinations may e.g. be whether the input sequence should be regarded as a look-up in a contact database.

According to the invention, activation may e.g. be an input signal executed as a command associated with the relevant process defined by the input signal.

Activation may e.g. result in a call being activated on the basis of the input characters, e.g. a telephone number.

When, as stated in claim 3, at least one of said at least two separate processes comprises a reading and/or access to a contact database (COD), a further advantageous embodiment of the invention has been obtained.

According to the invention, a contact database may e.g. comprise contents or keys such as person-ID, e-mail, telephone number, facsimile number, etc.

When, as stated in claim 4, said input signals are established by means of voice activation, keyboard means, active touch screen means and/or mouse means, a preferred embodiment has been obtained.

According to the invention, the input signal fed to the input means of the system may be established in any suitable way.

When, as stated in claim 5, said system is wholly or partly incorporated in a mobile telecommunication device, a further advantageous embodiment of the invention has been obtained.

According to an embodiment of the invention, the system may be incorporated in a mobile telecommunication device, e.g. a cellular phone, a personal digital assistant.

Evidently, a user interface according to the invention may be advantageously applied in systems bearing heavy restrictions with respect to the input means. Such restrictions may e.g. be that the number of applicable keys is limited and/or that the operation of the device is heavily menu/mode-oriented.

When, as stated in claim 6, the display of at least two separate processes of said input signals (IS) is performed in at least two separate sub-areas of said display means (DM), a further advantageous embodiment of the invention has been obtained.

According to the invention, the user of a mobile telecommunication device may input a telephone number and access the look-up table of the mobile telecommunication device simultaneously without locking up to a specific process until the user chooses to do so.

This simultaneous access to several functions offers both simple and quick operation of the device, and moreover, the user may easily shift between different functions instead of digging into one mode at a time.

When, as stated in claim 7, input signals (IS) are displayed as the entry of a telephone number (TN) in a sub-area (SA1) of said display means (DM)
and when said input signals (IS) are simultaneously displayed as the entry of character-based access of said at least one system database (IDT) in a further sub-area (SA2), a further advantageous embodiment of the invention has been obtained.

When, as stated in claim 8, the single or multi-character numerical key ( ) of a keyboard results in

simultaneous entry of a number corresponding to the activated numerical key ( ) in a sub-area ( ) of the display means (DM) of the mobile telecommunication device (MTD) and
the display of optional available choices of a key-accessible system database in a further sub-area ( ) corresponding to (some or any of the) available elements of said system database with the characters being associated with said activated multi-character numerical key ( ), a further advantageous embodiment of the invention has been obtained.

When, as stated in claim 9, said display of available selections of a system database in a further sub-area ( ) correspond to some or any of the available elements of system database according to a combination of any of the characters associated with said activated multi-character numerical key ( ) defined by the chronology of a sequence of activated multi-character numerical keys ( ), a further advantageous embodiment of the invention has been obtained.

According to the invention, the user may gradually be presented to available choices of at least one index, e.g. a telephone book determined by the possible combinations of the entered sequence of the multi-character numerical keys and the available elements of the index matching said combinations.

Hence, when entering number "2" on a typical telephone keyboard, this key may represent both the characters "A", "B" and "C" if no further actions are made to select the actually desired character.

When subsequently entering a number "6", the possible combinations are reduced to a string comprising the two first characters of any arbitrary combination of "A", "B" and "C" and "M", "N" and "O", i.e. AM.., AN.., AO.., BM.., BN.., BO.., CM.., CN.., and CO. Depending on the applied language, and especially the applied table, the possible indices may be significantly reduced by entering even very few keys when dealing with a table comprising many elements.

Evidently, this functionality may be very advantageous when dealing with e.g. a customized phonebook or look-up table defined by the user of a mobile phone.

The operation of the table may be even further optimized when, according to a preferred embodiment of the invention, the remaining available choices are displayed to the user in a way so he can e.g. scroll a table for the remaining selectable contact persons in the look-up table.

Hence, according to the invention, a user may typically select a certain, specified addressee, e.g. a person, and activate the relevant telephone number by entering two or three keys of a typical mobile phone having a typical, customized address book, - still without entering any dedicated menu or mode.

Hence, according to the invention several important features should be noted, such as applying a multi-mode when operating the phone, and exploiting the typically restricted number of available keys in an very efficient way.

According to the invention, the call setup time may be reduced significantly while maintaining very simple and intuitive operation, and thereby avoiding the necessity of e.g. applying codes which are either complex or hard to remember.

When, as stated in claim 10, said activation means (AM) comprises input means adapted to facilitating execution of at least one executable command by said input processing means of at least one of said at least two separate processes controlled by said input signals (IS), a preferred embodiment has been obtained.

According to one embodiment of the invention, an executable command may e.g. be activation of an outgoing call based on a number sequence processed in one of the parallel processes. Other applicable executable commands may e.g. be submission of an SMS message, editing of a specified database, etc.

Moreover, it should be noted that the simultaneous process may result in further activation of the activation means proceeded or succeeded by further traversing trough menus or modes of the specific process etc. controlled by user-provided input signals.

### The figures

The invention will now be described in detail with reference to the figures in which
figures 1a and 1b illustrate two mobile communication devices according to the invention
figs. 2a and 2b illustrate an embodiment of the invention, and
fig. 3a to fig. 9b illustrate the operation of a preferred interface according to the invention.

### Detailed description

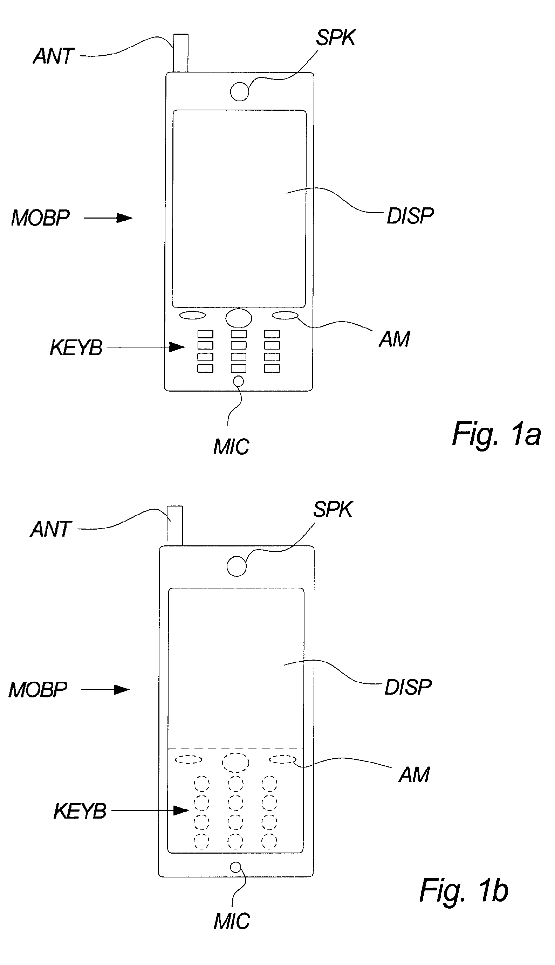

Fig. 1a illustrates a mobile communication device MOBP according to a preferred embodiment of the invention. The device comprises an antenna, a speaker, a display DISP, a keyboard KEYB and a microphone MIC.

Moreover, the illustrated embodiment comprises activation means in the form of a key.

Evidently, activation means according to the invention may be applied in several other ways than by means of a dedicated key.

Fig. 1b illustrates a variant of the above-described mobile phone having a touch-screen keyboard/display.

According to a preferred embodiment of the invention, the above-described mobile communication device may comprise a very advantageous user interface. This user interface is described below.

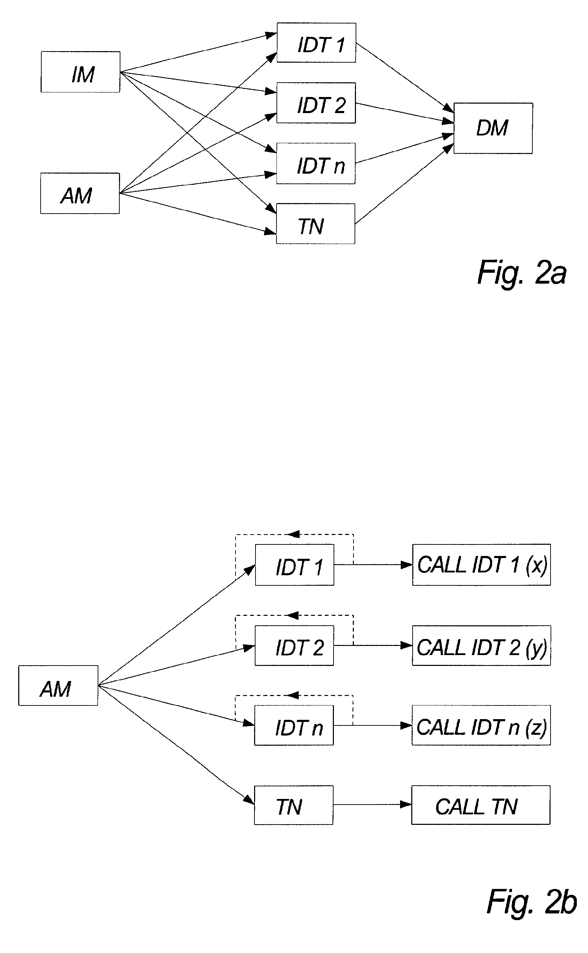

Fig. 2a illustrates some basic principles of the invention.

The user of a mobile telecommunication device inputs characters by means input means IM. The input means IM typically comprises a traditional user interface such as the above-described keyboard, touch screen, a mouse, etc.

The input data are processed simultaneously by the user interface of the telephone in separate operations. The result of each separate processing is displayed simultaneously.

According to the illustrated embodiment, a first parallel operation TN results in the characters input by the input means being compiled into a telephone number TN. This telephone number is dynamically displayed on the display means DM of the telephone in a corresponding sub-area.

Moreover, n parallel operations IDT1, IDT2, IDTn are processed on the basis of the same input characters.

A second parallel operation may e.g. be accessing a first index data table (also called a database) IDT1 by means of the above-mentioned input characters. The result of this access may be displayed in a sub-area of the display means DM on a run-time basis.

The index data table may e.g. be a character-based telephone book accessible via a look-up interface. According to the invention, a look-up interface means that a certain character or a combination of characters is input by means of the input means and subsequently displayed as a set or subset of available data elements of the addressed data table matching the input characters or combinations of characters.

An index data table may also simply be accessed by a character-based code or a number, i.e. a command. This command/code may e.g. be a local number or a person's office initials.

If two parallel operations are processed at the same time, the applicable operations may be a first parallel operation of inputting and displaying a telephone number in a sub-area of the display means and a second parallel operation of looking-up a telephone book incorporated in the mobile telephone.

The parallel operations are processed by means of input processing means IPM on the basis of input signals IS obtained by means of the input means IM.

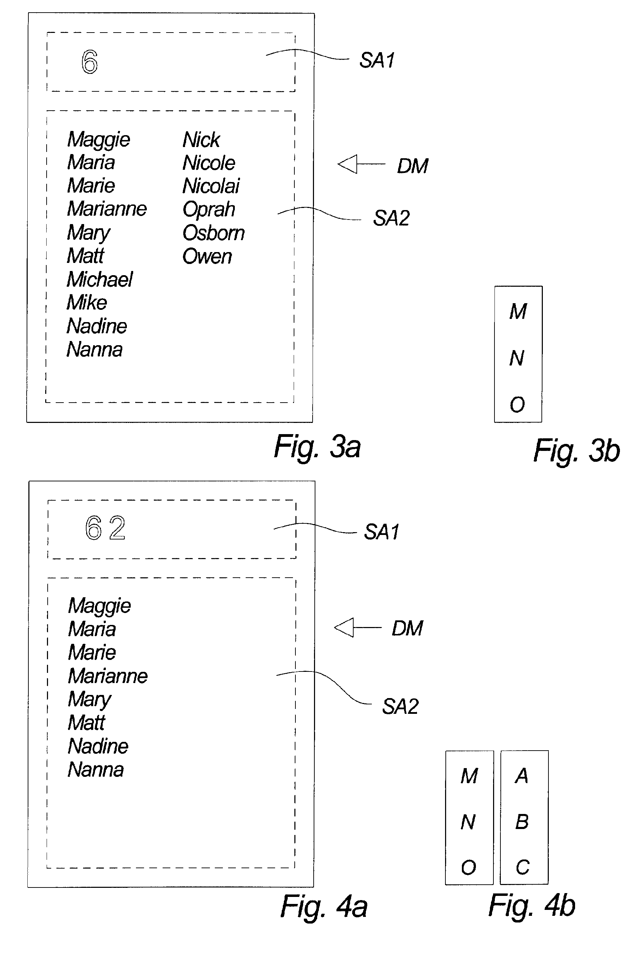

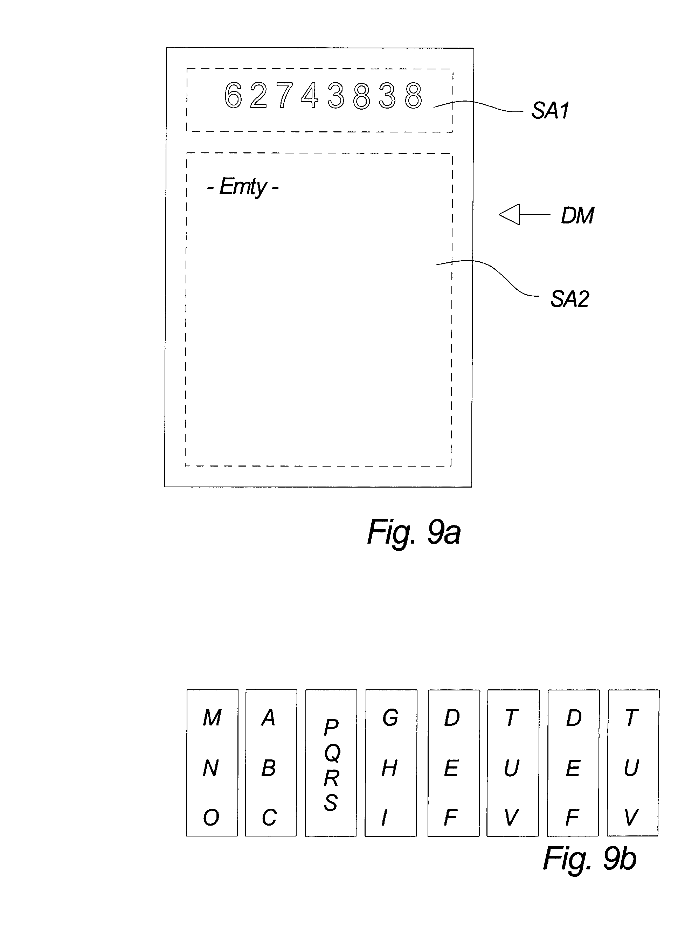

When the user decides whether he would like to proceed with one of the parallel operations, he may choose to activate the presently selected activity of the relevant parallel operation. This operation is illustrated in detail in figs. 3a, 3b to figs. 9a, 9b showing an embodiment addressing the two parallel operations mentioned above, i.e. input of a telephone number TN simultaneously with processing a look-up telephone table.

It should be noted that according to the invention, a look-up data table may comprise several different types of data elements, e.g. a look-up table comprising telephone numbers which may be addressed via user-defined characters, words or numbers. Such data elements may also be an executable code, i.e. a code which may be activated when selected by the user. Such an executable code may e.g. traditionally be a name entered in a customized telephone book incorporated in a mobile communication device which results in a call being initiated to a telephone number associated with the selected name when activated.

Another possible table may e.g. be a look-up table comprising information, e.g. held in the internal memory of the communication device, or the information may e.g. be accessed in an external data base via WAP, http or other applicable protocols and systems.

Other possible table data elements may e.g. be an e-mail address table associated with a number of data elements, e.g. contact persons comprised in the telephone book.

As stated above, the data elements may evidently comprise information only and/or executable commands.

Moreover, it should be noted that the mobile communication device may comprise means for establishing the desired combinations of parallel processes. Hence, according to a preferred embodiment of the invention, a user may choose to modify the global mode for the communication device by defining the above-described two-process operation, i.e. a sub-area for entering a telephone number and a sub-area for monitoring the contents of a telephone book, to a global mode featuring the above-stated two parallel processes and an additional parallel process. The additional parallel process may e.g. be operation of a look-up table containing local corporate telephone numbers accessible via the initials of the individual employees on a look-up basis and the look-ups may be displayed in a further associated sub-area of the display.

Moreover, the illustrated system and process handling of fig. 2a require activation means AM. The activation may be carried out by a user activating one of the simultaneous processes when so desired.

Examples of the functionalities of the activation means AM of fig. 2a are described in fig. 2b.

It should be noted that the processes principally run simultaneously until the user chooses to lock-up to one of the operations.

Variants applicable within the scope of the invention may e.g. be automatically omitting one or several of the simultaneous processes as long as these processes present no meaningful results.

According to the invention, the term activation may evidently comprise the selection of a certain data element addressed in one of the simultaneous processes, e.g. a selected name of a person stored in a table, and in the same step or a closely related subsequent step, initiating a call based on call parameters, e.g. a telephone number, associated with the selected person. This step is illustrated in fig. 2b, in which the activation means is applied for selecting n+1 possible execution commands, e.g. outgoing calls, EX IDT1 (x), EX IDT2 (y), EX IDTn (z) and EX TN.

It should be noted that the user exclusively chooses when and on which process to focus according to a preferred embodiment of the invention.

Fig. 3a to fig. 9b illustrate a preferred global mode according to the invention.

Fig. 3A illustrates the display means DM of a mobile communication device. The display means are divided into two sub-areas SA1, SA2 in the illustrated global mode.

Evidently, other sub-area handling techniques may be applicable within the scope of the invention.

The sub-area SA1 is intended to display the input characters as a telephone number TN and the sub-area SA2 is intended to display the input characters as keys to a telephone book incorporated in the mobile communication device or in associated storing means, e.g. a SIM-card.

Initially, the user inputs a character "6". This character is handled and displayed in the sub-area SA1 as the input of a telephone number starting with the number "6".

At the same time, the sub-area SA2 handles and displays the input character as a key to a telephone book. In this respect, the key is understood as a character "M", "N, or "O" as illustrated in fig. 3b. According to standard keyboard setups, the key "6" may both be applied for typing the above-stated characters and the number "6".

Turning now to fig. 4a and fig. 4b, the user activates the key "2".

This key is interfaced to the display and the two separate processes as a number "2" in the sub-area SA1 and as a further key, "A", "B" or "C", to the telephone book in the look-up table displayed in sub-area SA2.

Thus, the displayed data elements of sub-area SA2 are now reduced to the data elements having a key (name) starting with a combination of the available combinations of characters in the table, i.e. names starting with "M" and "N" followed by an "A", "B" and "C". In the present example, the remaining names are now names starting with "MA" and "NA".

Still, it should be noted that the user has made no local mode activation and may still proceed with both processes.

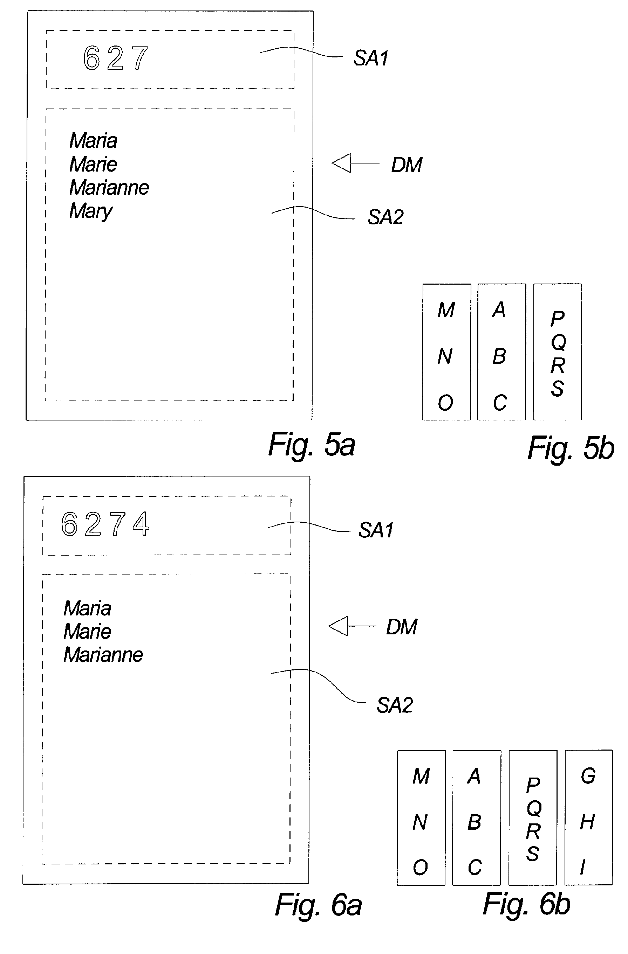

Turning now to figs. 5a and 5b, figs. 6a and 6b and figs. 7a and 7b, the user gradually reduces the number of optional data elements in the look-up table to the name "Marie" in the second process and the telephone number entered is 62743.

At this stage, the user is still free to jump from one search criterion or search semantic to another.

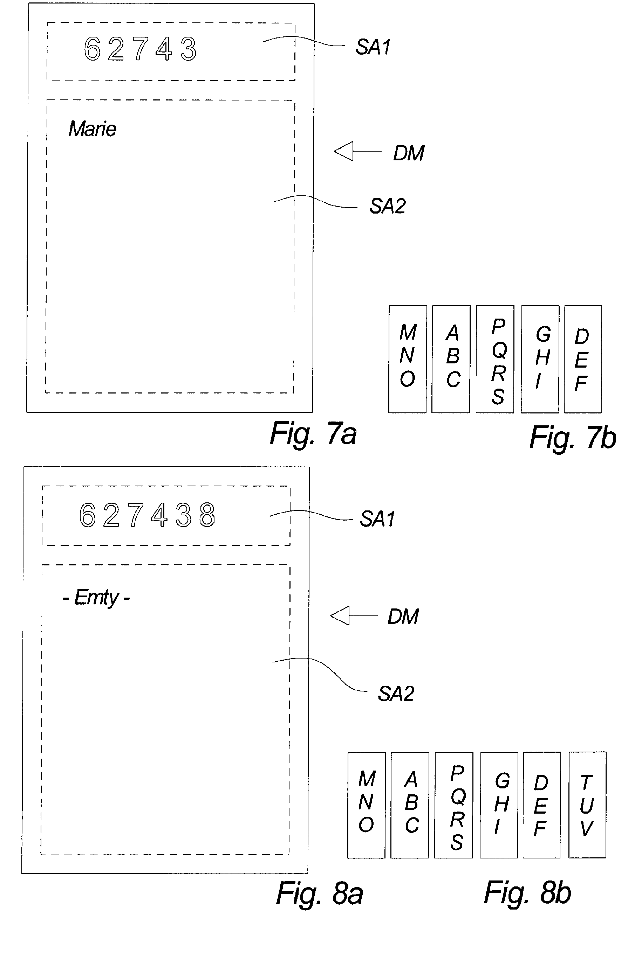

Figs. 8a, 8b and figs. 9a and 9b illustrate an additional number being input by means of e.g. the keyboard key and in figs. 9a, 9b, the user may now choose to proceed by activation of the telephone number input in the sub-area SA1, i.e. "62743838" e.g. by means of separate activation means AM, e.g. a key, arranged on the mobile telecommunication device or he may choose look in the telephone book.

Thus, according to the invention the user may now choose to activate the number of sub-area SA2 simply by using a dedicated activation key or other suitable activation means or rituals.

## Claims

1. User interface of a mobile communication system, said user interface comprising
input means (IM)
input processing means (IPM)
display means (DM)
at least one system database (IDT)
said input processing means (IPM) being adapted to processing input signals (IS) obtained by means of said input means (IS) and to simultaneously displaying at least two separate processes controlled by said input signals (IS) at said display means (DM).

2. User interface according to claim 1, wherein said system comprises means for selecting and activating (AM) at least one of said two separate processes.

3. User interface according to claim 1 or 2, wherein at least one of said at least two separate processes comprises a reading and/or access to a contact database (COD).

4. User interface according to any of claims 1 to 3, wherein said input signal is established by means of voice activation, keyboard means, active touch screen means and/or mouse means.

5. User interface according to any of claims 1 to 4, wherein
said system is wholly or partly incorporated in a mobile telecommunication device.

6. User interface according to any of claims 1 to 5, wherein the display of at least two separate processes of said input signals (IS) is performed in at least two separate sub-areas of said display means (DM).

7. User interface according to any of claims 1 to 6, wherein said input signals (IS) are displayed as the entry of a telephone number (TN) in a sub-area (SA1) of said display means (DM),
wherein said input signals (IS) are simultaneously displayed as the entry of character-based access of said at least one system database (IDT) in a further sub-area (SA2).

8. User interface according to any of claims 1 to 7, wherein the input of the single or multi-character numerical key ( ) of a keyboard results in
simultaneous entry of a number corresponding to the activated numerical key ( ) in a sub-area ( ) of the display means (DM) of the mobile telecommunication device (MTD) and
the display of optional available choices of an index accessible look-up table in a further sub-area ( ) corresponding to (some or any of the) available elements of said look-up table with any of the characters being associated with said activated multi-character numerical key ( ).

9. User interface according to any of claims 1 to 8,
wherein said display of available choices of a key-accessible system database in a further sub-area ( ) correspond to some or any of the available elements of said system database according to a combination of any of the characters being associated with said activated multi-character numerical key ( ) defined by the chronology of a sequence of activated multi-character numerical keys ( ).

10. User interface according to any of claims 1 to 9,
wherein said activation means (AM) comprises input means adapted to facilitating execution of at least one executable command by said input processing means of at least one of said at least two separate processes controlled by said input signals (IS).
